# EUROPÄISCHE PATENTSCHRIFT

(11) **EP 0 885 930 B1**
(45) Veröffentlichungstag und Bekanntmachung des Hinweises auf die Patenterteilung: **22.12.2004**
(21) Anmeldenummer: 98110599.2
(22) Anmeldetag: 08.06.1998
(51) Int. Cl.: C08L 77/06, C08L 77/00

(54) **Schlagzähe transparente Polyamidlegierungen**
Impact-resistant polyamide compositions
Compositions à base de polyamides résistant aux chocs

(30) Priorität: 17.06.1997 DE 19725617
(43) Veröffentlichungstag der Anmeldung: 23.12.1998
(73) Patentinhaber: EMS-INVENTA AG, 8002 Zürich (CH)
(72) Erfinder: Dalla Torre, Hans Herbert, Dr. Phil., 7013 Domat/Ems (CH); Hewel, Manfred, Dr.rer.nat., 7415 Rodels (CH)
(74) Vertreter: Pfenning, Meinig & Partner

(56) Entgegenhaltungen:
- EP-A- 0 550 308
- EP-A- 0 728 812
- US-A- 5 391 640

## Beschreibung

Durch Einarbeitung von sogenannten Schlagzähmodifikatoren in spröde Polymere können diese in ihrer Zähigkeit entscheidend verbessert werden. Die Schlagzähmodifizierung erfolgt üblicherweise durch Verteilung im Schmelzezustand von kleineren Anteilen einer zäh elastischen polymeren Komponente mit niedriger Glastemperatur in einen größeren Teil eines anderen oder eines gleichartigen weniger zähen Polymeren. Das resultierende Polymergemisch ist ein chemisches Blend oder eine Legierung und besitzt gänzlich neue Eigenschaften im Vergleich zu den Ausgangspolymeren. Die veränderten neuen Eigenschaften betreffen nebst der Zähigkeit die Viskosität, die Festigkeit, die Härte, die Wärmeformbeständigkeit, die Kriechneigung, die Beständigkeit gegen Chemikalien, die Dimensionsstabilität u.a.m.

Durch die Einarbeitung einer zweiten z.B. olefinischen Polymerphase in eine kontinuierliche Polyamidmatrix werden zudem auch das Aussehen und die Oberflächenbeschaffenheit verändert. Es entstehen meist weißgefärbte oder perlmuttartige strukturierte Oberflächen. Transparente Polyamide verlieren dabei die Transparenz, eine ihrer oft begehrtesten Eigenschaften. Solche schlagzähmodifizierten Produkte sind in EP 0 073 036, in EP 191 548 oder allgemeiner in DAS 1 341 606 beschrieben.

Durch Einkompoundierung von bestimmten Arten von zähen und transparenzverträglichen Polymeren können aufgrund gleicher Brechzahlen der beiden Phasen trotzdem transparente Polyamidgemische erhalten werden. So ist bekannt, daß Kernmantel-Polymere wie Metacrylat-Butadien-Styrol Copolymere, erwähnt in JP 04 337 355, oder bestimmte Polyesteramide z.B. aus Polyamid 12 und Caprolacton mit anderen Polyamiden, welche selbst Polyamid-12-Segmente im polymeren Kettenaufbau besitzen oder reaktive Polycarbonate mit amorphen Polyamiden, z.B. vom Typ PA 61/6T schlagzähe transparente Polyamidblends liefern.

Aus der EP 0 628 602 A1 sind transparente Polyamide bekannt die aus einem semikristallinen und damit trüben bzw. opaken Amid und einem amorphen Polyamid aufgebaut sind. Das resultierende Polyamid ist zwar ebenfalls transparent, weist aber unzureichende Eigenschaften in bezug auf die Zähigkeit und Dehnung und auf die Wärmeformbeständigkeit auf.

Eine weitere Möglichkeit zur Erhöhung der Schlagzähigkeit von spröden transparenten Polyamiden besteht darin, zähigkeitsverbessernde z.B. langkettige Monomere mit einzupolymerisieren oder zäheres teilkristallines Polyamid durch Kompoundierung zuzulegieren, wie dies in den Patenten US 4 404 317 mit Polyamid 66 oder in DE 2 642 244 mit Polyamid 12 oder in US 5 266 655 mit Polyamid 6 zu amorphen Copolyamiden zulegiert beschrieben wird. Durch diese Maßnahmen werden aber manche bestimmten Eigenschaften der Ausgangspolyamide oft zu stark verändert oder manche erwünschte Einzeleigenschaft wie die Transparenz geht verloren oder die geeigneten Monomeren stehen in der erforderlichen Reinheit, Menge oder Preis nicht zur Verfügung.

Aufgabe der vorliegenden Erfindung ist es deshalb, neue Polyamidlegierungen vorzuschlagen, die die bevorzugten Eigenschaften der Ausgangspolyamide im wesentlichen behalten und insbesondere die Zähigkeit und Dehnung verbessern.

Die Aufgabe wird durch die kennzeichnenden Merkmale des Anspruches 1 gelöst. Die Unteransprüche zeigen vorteilhafte Weiterbildungen auf.

Es ist überraschend gelungen, bei transparenten spröden und steifen Polyamiden, welche z.B. auch geringe Polyamid-12-Anteile in der Polymerkette besitzen, mit Hilfe von neuartigen Polyamiden, hergestellt aus 50-80 Mol-% eines langkettigen polyamidbildenden Monomeren mit mehr als C-10-Atomen und Kombinationen aus aliphatischen und/oder cycloaliphatischen Diaminen und aromatischen Dicarbonsäuren, wobei diese auch teilweise durch aliphatische Säuren ersetzt sein können, sehr tranparente und zähe Legierungen herzustellen. Diese besitzen die bevorzugten Eigenschaften der Ausgangspolyamide wie den Glaspunkt, die Festigkeit und Steifheit und verbessern hauptsächlich die Zähigkeit und die Dehnung. Bevorzugt werden PA12/6T-Typen zulegiert. Das zulegierte Polyamid PA12/6T wirkt wie ein Schlagzähmodifikator in kleinen Mengen und ist mit der Matrix des Ausgangspolyamides außerordentlich gut verträglich.

Die neuartigen schlagzähmodifizierend wirkenden Copolyamide, hier als Copolyamide B bezeichnet, werden bevorzugt aus 50-80 Mol-% Lactam 12, Hexamethylendiamin und Terephthalsäure hergestellt. Anstelle von Lactam 12 können auch ω-Aminolaurinsäure oder Dodecandiamin und Dodecandisäure eingesetzt werden. Anstelle von HMD können auch dessen Alkylhomologe wie 2,4,4- bzw. 2,2,4-Trimethylhexamethylendiamin oder Isomere wie 2-Methylpentamethylendiamin oder auch andere aliphatische oder araliphatische oder cycloaliphatische Diamine wie Dodecandiamin oder p- bzw. m-Xylilendiamin oder 4,4'Bis-aminomethylcyclohexan oder PACM oder MACM und ähnliche verwendet werden. Für Terephthalsäure sind auch Isophthalsäure oder 2,6-Naphthalindicarbonsäure oder Trimethylisophthalsäure oder andere aromatische Dicarbonsäuren verwendbar. Diese kommen zudem mit bis zu 50 % durch aliphatische Dicarbonsäuren wie Sebacinsäure oder Dodecandisäure ersetzt sein.

Die relativ spröden und steifen Polyamide, hier Polyamide A genannt, sind amorph und transparent und zeichnen sich durch eine Glasübergangstemperatur von über 160 °C aus. Sie werden erhalten, indem mindestens 35 Mol-% cycloaliphatische Diamine eingesetzt werden. Diese Amine werden mit mehr als 25 Mol-% den aus dem Stand der Technik bekannten polyamidbildenden Monomeren mit 6-12 C-Atomen umgesetzt. Es können auch die bereits bei Polyamid B beschriebenen umgesetzt werden. Es ist bekannt, daß cycloaliphatische Diamine den Glaspunkt und den Modul von Polyamiden erhöhen und gleichzeitig die Schlagzähigkeit und die Kerbschlagzähigkeit vermindern. Die cycloaliphatischen Diamine enthalten üblicherweise 6-20 C-Atome. Besonders geeignet sind cycloaliphatische Diamine mit mindestens einem 5er-, 6er- oder 7er-Ring und bicyclische Verbindungen mit mindestens 7 C-Atomen. Beispiele für cycloaliphatische Diamine sind:
- IPD: Isophorondiamin (5-Amino-1,3,3-trimethylcyclohexanmethanamin)
- BAMC: Bis(aminomethyl-)cyclohexan
- NBDA: Bis(aminomethyl)bicyclo[2,2,1]heptan
- PACM: 4,4'-Diaminocyclohexylmethan
- MACM: 3,3'-Dimethyl-4,4'-diaminodicyclohexylmethan
- PACP: 4,4'diaminodicyclohexyl-2,2-propan
- BN: Bis-aminomethylnorbornan
- TCD: 3(4),8(9)Bis-aminomethyltricyclo-(5,2,1,0^{2,6})-decan

Die cycloaliphatischen Diamine werden mit aromatischen und/oder aliphatischen Dicarbonsäuren kombiniert. Besonders geeignet sind Isophthalsäure, Terephthalsäure, 2,6-Naphthalindicarbonsäure, Adipinsäure, Azelainsäure, Dodecandisäure und/oder Dimersäuren.

Bei den aliphatischen Disäuren sind die langkettigen Dicarbonsäuren mit 9 oder mehr C-Atomen besonders geeignet, weil sie zu einer niedrigen Wasseraufnahme und einer an sich schon guten Zähigkeit des Polyamides führen.

Wesentlich beim Anmeldungsgegenstand ist, daß sowohl das Polymid A wie auch das Polyamid B amorphe und damit transparente Polyamide eingesetzt werden. Es ist deshalb bei der Herstellung des Polyamids A bzw. B darauf zu achten, daß die einzelnen Ausgangsverbindungen in solch Konzentrationen verwendet werden, daß keine kristallinen bzw. semikristallinen und damit opake Produkte entstehen. Das Polyamid B besteht demnach bevorzugt aus 50-80 Mol-% eines langkettigen polyamidbildenden Monomers mit mehr als 10 C-Atomen und mindestens 10 Mol-% Terephthalsäure, und aus 10 Mol-% Hexamethylendiamin und/oder aus HMD oder alkylsubstituierten HMD und einem cycloaliphatischen Diamin.

Die erfindungsgemäßen transparenten und zähen Polymerlegierungen werden hergestellt durch Kompoundierung von 98-30 Gew-% des spröden Polyamides A und 2-70 Gew-% des zähen Copolyamides B, indem die 2 Polyamide entweder vor der Kompoundierung als Granulate gemischt werden oder indem bei der Kompoundierung eine Komponente zur anderen Komponente zudosiert wird. Die Dosierung kann mittels Förderrinnen oder Förderbänder oder direkt aus gewogenen Behältern in jede beliebige Aufschmelzzone der Kompoundierungsmaschine erfolgen. Durch innige Mischung der Schmelzen lösen sich die Phasen der Komponenten A und B gegenseitig, und es entsteht ein blockartiger Phasenaufbau der Molekülketten, sofern nicht zu hohe Schmelzetemperaturen verwendet werden, welche eine Umamidierung bewirken können. Geeignete Kompoundiertemperaturen liegen bei 260-290 °C.

Die erfindungsgemäßen hellen transparenten Legierungen zeichnen sich also aus durch gute Zähigkeit, hohe Festigkeit, hohe Steifheit, eine gute Wärmeformbeständigkeit und gute Lösungsmittelbeständigkeit und eignen sich für eine Vielzahl von Anwendungen im Bereich Medizin und Hygiene, Toilettrie, Sport und Freizeit, Haus- und Küchengeräte, für Abdeckungen im Elektro- und Maschinenbereich, für Behälter usw.

Die erfindungsgemäßen transparenten und zähen Polyamidlegierungen werden durch die nachfolgenden Beispiele näher erläutert:

### Beispiel 1

Ein Copolyamid, hergestellt aus 18 Mol-% Laurinlactam, 41 Mol-% 3,3'Dimethyl-4,4'diaminodicyclohexylmethan und 41 Mol-% Isophthalsäure mit einer Lösungsviskosität in 0,5 % m-Kresol von 1,45, einem Glaspunkt von 205 °C, einer Schlagzähigkeit nach DIN 53453 (bei 23°/trocken) von 45 kJ/m², einer Kerbschlagzähigkeit (DIN 53453) von 2,8 kJ/m² (23°/tro) und einem Zug-E-Modul (DIN 53457) von 2500 N/mm² (23°/tro) wurde mit 10 Gew.-% eines Copolyamides PA 12/6T gemischt, welches aus 60 Mol-% Laurinlactam, 20 Mol-% Hexamethylendiamin und 20 Mol-% Terephthalsäure polykodensiert worden war und eine Lösungsviskosität in 0,5 % m-Kresol von 1,8, einen Glaspunkt von 62 °C, eine Schlagzähigkeit OB, eine Kerbschlagzähigkeit von 9 kJ/m² und einen Zug-E-Modul von 1850 N/mm² besaß und in einem Extrudertyp "Werner Pfleiderer ZSK 30" bei 285 °C kompoundiert. Das resultierende Polymergemisch war nach der Trocknung hell und transparent und die an Zugstäben davon gemessenen Eigenschaften waren wie folgt:
Glaspunkt 185 °C, Schlagzähigkeit (DIN 53453), 80 % OB - 20 % 85 kJ/m² (23°/trocken), Kerbschlagzähigkeit (DIN 52453; 23°/tro), 4,8 kJ/m², Zug-E-Modul (DIN 53457, 23°/tro), 2420 N/mm².

### Beispiel 2

In einem gleichen Extruder wie in Beispiel 1 (Werner Pfleiderer ZSK 30) wurde bei 280 °C ein Granulatgemisch kompoundiert, welches aus 80 Gew.-% eines amorphen Copolyamides PA12/MACMI und 20 Gew.-% eines Copolyamides CoPA 12/6T/6l bestand. Das amorphe Copolyamid PA12/MACMI wurde aus 20 Mol-% Lactam 12 und 40 Mol-% 3,3'-Dimethyl-4,4'diaminodicyclohexylmethan und 40 Mol-% Isophthalsäure polykondensiert und besaß eine Lösungsviskosität (0,5 % m-Kresol) von 1,43, einen Glaspunkt von 196 °C, eine Schlagzähigkeit (nach DIN 53453) bei 23°/tro von 60 % OB und 40 % 66 kJ/m², eine Kerbschlagzähigkeit (nach DIN 53453) bei 23°/tro von 1,6 kJ/m² und einen Zug-E-Modul (nach DIN 53457) von 2410 N/mm² (23°/tro). Das CoPA 12/6T/6I, welches aus 80 Mol-% Lactam 12, 10 Mol-% eines 1:1-Gemisches von Terephthalsäure und Isophthalsäure hergestellt wurde, besaß folgende Eigenschaften:
Glaspunkt 36 °C, µrel 1,93 (0,5 m-Kresol), Schlagzähigkeit (nach DIN 53453) OB (23°/trocken), Kerbschlagzähigkeit (DIN 53453) 20 % OB-80 %, 26 kJ/m² (23°/tro), Zug-E-Modul (DIN 53457) 1070 N/mm² (23°/tro). Die hergestellte transparente und helle Legierung hatte nach Trocknung und gemessen an Prüfstäben einen Glaspunkt von 164 °C, eine Schlagzähigkeit (DIN 53453) 40 % OB - 60 % 80 kJm² (23°/tro), eine Kerbschlagzähigkeit (DIN 53453) von 7,2 kJ/M² (23°/tro) und einen Zug-E-Modul (DIN 53457) von 2290 N/mm² (23°/tro).

### Vergleichsbeispiel A (aus EP 0 070 001) (für ein transparentes Blend aus einem amorphen Copolyamid und einem teilkristallinen Polyamid)

80 % eines Copolyamides PA 6I/6T/PACMI/PACMT (66,8/28,6/3,2/1,4) mit einer intrinsischen Viskosität von 0,93, einem Glaspunkt TG 128 °C, einem HDT_{A} bei 1,8 N/mm² von 123 °C, einer Streckspannung von 96,6 N/mm², einer Reißdehnung von 49 %, einem Zug-E-Modul von 2780 N/mm² und einer Kerbschlagzähigkeit von 3,37 kJ/m² (=85,4 J/m) wurde mit 20 % Polyamid 66 in einem Werner-Pfleiderer-Extruder zu einem transparenten Blend mit folgenden Eigenschaften kompoundiert:
HDT_{A} (1,8 N/mm²) 108 °C, Streckspannung 98,7 N/mm², Reißdehnung 75 %, Kerbschlagzähigkeit 2,78 kJ/m² (= 70,46 J/m).
(Die Schlagzähmodifizierung war hier nicht besonders wirksam.)

### Vergleichsbeispiel B (aus US 4 536 541)

Ein ähnliches amorphes Copolyamid, ein PA 6I/6T/PAC-MI/PACMT(57,6/24,7/12,4/4,3) mit einem Glaspunkt von 146 °C, einer Streckspannung von 82 N/mm², von einem Zug-E-Modul von 2800 N/mm² und einer Kerbschlagzähigkeit von 2,80 kJm² wurde mit 10 % eines Schlagzähmodifikators vom Typ eines mit Maleinsäureanhydrid gepfropften Ethylen-Propylen-Hexadien-Norbornadien (68/24/6,4/1,6) und 15,0 % eines Schlagzähmodifikators vom Typ eines ebenfalls mit MAH gepfropften Ethylen-Propylen-Hexadien-Norbornadien-Copolymers verschiedener Viskosität kompoundiert. Das Blend resultierte völlig milchig weiß, also ohne Transparenz, und war schlagzäh. Das Blend besaß folgende Eigenschaften:
Glaspunkt 140 °C, Streckspannung 54 N/mm², Reißdehnung 93 %, Zug-E-Modul 1500 N/mm², Kerbschlagzähigkeit 38,6 kJ/m².
(Das Blend war also nicht mehr transparent, sondern weiß und erlitt eine starke Verminderung der Streckspannung und des Zug-E-Moduls.)

## Patentansprüche

1. Transparente Polyamidlegierung, mit einem TG > 120° hergestellt durch Kompoundierung aus
30-98 Gew-% eines transparenten, amorphen, steifen und/oder spröden Polyamides A mit mindestens
35 Mol-% cycloaliphatischem Diamin, nicht mehr als 25 Mol-% eines langkettigen polyamidbildenden Monomers von einer C-Atomzahl 6-12, und einem Glasübergangspunkt von mindestens 160 °C, und
2-70 Gew-% eines transparenten, amorphen schlagzähen Polyamids B mit 50-80 Mol-% mindestens eines langkettigen polyamidbildenden Monomeren mit mehr als 10 Kohlenstoffatomen und mindestens 10 Mol-% Terephthalsäure und einem Glasübergangspunkt unter 90 °C.

2. Polyamidlegierung nach Anspruch 1,
**dadurch gekennzeichnet,**
**daß** das cycloaliphatische Diamin des Polyamid A aus der Gruppe 3,3'-Dimethyl-4,4'-diaminodicyclohexylmethan, 4,4'-Diaminodicyclohexyl-2,2-propan, 4,4'-Diaminodicyclohexylmethan, 5-Amino-1,3,3-trimethylcyclohexanmethanamin, Bis(aminomethyl)-cyclohexan, Bis-aminomethylnorbornan, 3(4),8(9)Bis-aminomethyl-tricyclo 5,2,1,0,^{2,6})-decan oder deren Mischungen ausgewählt ist.

3. Polyamidlegierung nach Anspruch 1 oder 2,
**dadurch gekennzeichnet, daß** im Polyamid B neben Terephthalsäure weitere Dicarbonsäuren, ausgewählt aus Isophthalsäure, 2,6-Naphthalincarbonsäure, Tributylisophthalsäure, Azelainsäure, Sebacinsäure, Dodecandisäure oder eine C₃₆-Dicarbonsäure oder deren Mischungen, enthalten sind.

4. Polyamidlegierung nach mindestens einem der Ansprüche 1 bis 3,
**dadurch gekennzeichnet, daß** die langkettigen Monomeren im Polyamid B ausgewählt sind aus: ω-Aminoundecansäure, Lactam 12 oder ω-Aminolaurinsäure, Dodecandisäure und Dodecandiamin oder deren Mischungen.

5. Polyamidlegierung nach mindestens einem der Ansprüche 1 bis 4,
**dadurch gekennzeichnet, daß** das Polyamid B 4,4'diaminodicyclohexylmethan, 4,4'Diaminodicyclohexyl-2,2'-propan oder deren Mischungen enthält.

6. Polyamidlegierung nach mindestens einem der Ansprüche 1 bis 4,
**dadurch gekennzeichnet, daß** diese Additive wie Entformungsmittel, Gleitmittel, UV und Hitzestabilisatoren, Katalysatoren, Weichmacher, Pigmente, Farben, Füllkörper, Glas und Kohlefasern, mineralische Stoffe und ähnliche enthält.

## Claims

1. Transparent polyamide alloy produced with a TG > 120° by compounding
30-98 weight-% of a transparent amorphous stiff and/or brittle Polyamide A
with at least
35 mol-% cycloaliphatic diamine, no more than 25 mol-% of a long-chain polyamide-forming monomer of a C-atom number 6-12, and a glass transition point of at least 160°,
and
2-70 weight-% of a transparent amorphous impact-resistant Polyamide B with 50-80 mol-% of at least one long-chain polyamide-forming monomer with more than 10 carbon atoms and at least 10 mol-% terephthalic acid and a glass transition point below 90°C.

2. Polyamide alloy according to Claim 1, **characterised in that** the cycloaliphatic diamine of Polyamide A of the group 3,3'-dimethyl-4,4'-diaminodicyclohexylmethane, 4,4'-diaminodicyclohexyl-2,2-propane, 4,4'-diaminodicyclohexylmethane, 5-amino-1,3,3-trimethylcyclohexanemethanamine, bis(aminomethyl)-cyclohexane, bis-aminomethylnorbornan, 3(4),8(9)bis-aminomethyl-tricyclo 5,2,1,0,^{2.6})-decane or their mixtures is selected.

3. Polyamide alloy according to Claim 1 or 2, **characterised in that** the Polyamide B contains, amongst terephtalic acid, further dicarboxylic acids selected from isophtalic acid, 2,6-naphthalinecarboxylic acid, tributylisophthalic acid, azelaic acid, sebacic acid, dodecandic acid or a C₃₆-dicarboxylic acid or their mixtures.

4. Polyamide alloy according to at least one of Claims 1 to 3, **characterised in that** the long-chain monomers in Polyamide B are selected from:
ω-aminoundecanic acid, Lactam 12 or ω-aminolaurin acid, dodecandic acid and dodecandiamine or their mixtures.

5. Polyamide alloy according to at least one of Claims 1 to 4, **characterised in that** the Polyamide B contains 4,4'diaminodicyclohexylmethane, 4,4'diaminodicyclohexyl-2,2'-propane or their mixtures.

6. Polyamide alloy according to at least one of Claims 1 to 4, **characterised in that** these additives, such a unshaping means, sliding means, UV and heat stabilisers, catalysts, softeners, pigments, dyes, fillers, glass and carbon fibres, contain mineral substances and the like.

## Revendications

1. Alliage de polyamides transparent, avec une température de transition vitreuse TG > 120 °C, produit par compoundage de
30 à 98 % en poids d'un polyamide A transparent, amorphe, rigide et/ou fragile avec au moins
35 % en mole d'une diamine cycloaliphatique, pas plus de 25 % en mole d'un monomère à longue chaîne générateur de polyamide d'un nombre d'atomes de C de 6 à 12 et une température de transition vitreuse d'au moins 160 °C et
2 à 70 % en poids d'un polyamide B transparent, amorphe, résilient, avec 50 à 80 % en mole d'au moins un monomère à longue chaîne générateur de polyamide avec plus de 10 atomes de carbone et au moins 10 % en mole d'acide téréphtalique, et une température de transition vitreuse de moins de 90 °C.

2. Alliage de polyamides selon la revendication 1, **caractérisé en ce que**, la diamine cycloaliphatique du polyamide A est choisie dans le groupe du 3,3'-diméthyl-4,4'-diaminodicyclohexylméthane, du 4,4'-diaminodicyclohexyl-2,2-propane, du 4,4'-diaminodicyclohexylméthane, de la 5-amino-1,3,3-triméthylcyclohexaneméthanamine, du bis(aminométhyl)cyclohexane, du bis-aminométhylnorbornane, du 3(4),8(9)bis-aminométhyl-tricyclo 5,2,1,0,^{2,6})-décane ou de leurs mélanges.

3. Alliage de polyamides selon la revendication 1 ou 2, **caractérisé en ce que**, outre l'acide téréphtalique, d'autres acides dicarboxyliques sont contenus dans le polyamide B, choisis parmi l'acide isophtalique, l'acide 2,6-naphtalène carboxylique, l'acide tributylisophtalique, l'acide azélaïque, l'acide sébacique, l'acide dodécanedioïque ou un acide dicarboxylique en C₃₆ ou leurs mélanges.

4. Alliage de polyamides selon l'une au moins des revendications 1 à 3, **caractérisé en ce que** les monomères à longue chaîne dans le polyamide B sont choisis parmi : l'acide ω-amino-undécanoïque, le lactame 12 ou l'acide ω-aminolaurique, l'acide dodécanedioïque et la dodécanediamine ou leurs mélanges.

5. Alliage de polyamides selon l'une au moins des revendications 1 à 4, **caractérisé en ce que** le polyamide B contient du 4,4'-diaminocyclohexylméthane, du 4,4'-diaminodicyclohexyl-2,2'-propane ou leurs mélanges.

6. Alliage de polyamides selon l'une au moins des revendications 1 à 4, **caractérisé en ce que** ce dernier contient des additifs tels des agents de démoulage, des lubrifiants, des agents de stabilisation aux UV et à la chaleur, des catalyseurs, des plastifiants, des pigments, des colorants, des charges, des fibres de verre et de carbone, des substances minérales et similaires.
